# EUROPEAN PATENT APPLICATION

(11) **EP 3 941 080 A1**
(43) Date of publication of application: **19.01.2022**
(21) Application number: 19918676.8
(22) Date of filing: 13.03.2019
(51) Int. Cl.: H04N 21/854, G06Q 50/10, H04N 21/2668

(54) **LIVE STREAMING SYSTEM AND LIVE STREAMING METHOD**

(71) Applicant: Balus Co., Ltd., Tokyo 101-0021 (JP)
(72) Inventor: HAYASHI, Norikazu, Tokyo 101-0021 (JP)
(74) Representative: TBK
(86) International application number: PCT/JP2019/010165
(87) International publication number: WO 2020/183630

(57) **Abstract**

To enhance a sense of immersion of all participants in a plurality of live venues where a live video is simultaneously streamed.

A live streaming system 1 includes a reaction collection unit 4 and a rendition effect control unit 5, and simultaneously streams a live video to a plurality of live venues A to C different in location. The reaction collection unit 4 collects the reactions of the participants viewing the live video at the live venues A to C in real time for each live venue from a detection device 7 in the live venue. The rendition effect control unit 5 determines a rendition effect to be rendered at the live venues A to C for each live venue on the basis of the reactions of the participants at each live venue collected by the reaction collection unit 4.

## Description

### Technical Field

The present invention is directed to a live streaming system and a live streaming method, and particularly relates to simultaneous live streaming to a plurality of live venues different in location.

### Background Art

For example, Patent Literature 1 discloses an event rendition system in which users, while cooperating with each other or competing with each other, output a predetermined rendition effect to a video display apparatus that displays a video of a concert of a singer or a character. This event rendition system includes a rendition control subsystem, a user terminal, and a video display apparatus. The rendition control subsystem performs rendition control of an event venue. The user terminal is connected to the rendition control subsystem via a communication network. The video display apparatus is provided at an event venue and displays a video of a rendition effect by the rendition control subsystem. Here, the rendition effect is selected by using points generated by various works of the user at the event venue, and this is synthesized with video data. For example, an operation of displaying and then erasing a comment is added as a layer behind a video in which a character sings, and an event is excited through such a rendition effect.

### Citation List

### Patent Literature

Patent Literature 1: JP 2017-151978 A

### Summary of Invention

### Technical Problem

By the way, in the case of simultaneously performing live streaming to a plurality of live venues different in location, since the degree of excitement (heat-up) of the participants differs for each live venue, if the same rendition effect is uniformly performed in all the live venues, there is a possibility that the participants may feel uncomfortable depending on the venue. For example, a high rendition effect that further excites the participants is preferable in a live venue that is already sufficiently excited, but is not preferable in a live venue that is less excited. In such a live venue, it is rather easier to obtain a sense of immersion for the participants by moderating the rendition effect.

The present invention has been made in view of such circumstances, and an object of the present invention is to enhance a sense of immersion of all the participants in a plurality of live venues where live streaming is performed simultaneously.

### Solution to Problem

In order to achieve such object, a first invention provides a live streaming system that includes a reaction collection unit and a rendition effect control unit, and simultaneously performs live streaming to a plurality of live venues different in location. The reaction collection unit collects reactions of the participants at the live venue in real time for each live venue from a detection device in the live venue. The rendition effect control unit individually determines a rendition effect to be rendered at each live venue for each live venue on the basis of the reactions of the participants at each live venue collected by the reaction collection unit.

Here, in the first invention, the rendition effect control unit may generate a rendition effect video for each live venue as the rendition effect, and stream the live video synthesized with the video effect video to the live venue. Furthermore, the rendition effect control unit may determine a rendition effect audio for each live venue as the rendition effect and instruct an audio device on the live venue side. Moreover, the rendition effect control unit may determine rendition effect lighting for each live venue as the rendition effect and instruct a lighting device on the live venue side.

In the first invention, the detection device may be a plurality of mobile terminals owned by participants at a live venue, and the reactions of the participants may be the number of user operations of the participants on the plurality of mobile terminals. Furthermore, the detection device may be a camera installed in each live venue, and the reaction of the participant may be movement in an image acquired by the camera. Furthermore, the detection device may be a microphone installed in each live venue, and the reaction of the participant may be a sound acquired by the microphone. Moreover, the detection device may be a temperature sensor installed in each live venue, and the reaction of the participant may be a temperature change acquired by the temperature sensor.

A second invention provides a live streaming method for simultaneously performing live streaming to a plurality of live venues different in location. In this live streaming method, in a first step, a live video of a virtual character is generated by converting the movement of a performer into the movement of the virtual character. In a second step, the reaction of the participant viewing the live video at a live venue is collected in real time for each live venue from the detection device on the live venue side. In a third step, the rendition effect to be rendered in the live venue is determined for each live venue on the basis of the collected reaction of the participants for each live venue. In a fourth step, a rendition effect video is generated for each live venue on the basis of the determined rendition effect for each live venue. In a fifth step, the generated rendition effect video for each live venue is synthesized with the generated live video. In a sixth step, the live video of each live venue synthesized with the rendition effect video is streamed to the live venue.

### Advantageous Effects of Invention

According to the present invention, the rendition effect to be rendered at the live venue is individually determined for each live venue according to the reactions of the participants at each live venue, thereby executing the rendition effect suitable for each live venue. Thus, the sense of immersion of all the participants in the simultaneous live streaming can be effectively enhanced without giving discomfort to the participants in a specific live venue.

### Brief Description of Drawings

Fig. 1 is a block diagram of a virtual live system according to the present embodiment.
Fig. 2 is a diagram illustrating an example of a live video.
Fig. 3 is a diagram illustrating an example of a rendition effect video.
Fig. 4 is a diagram illustrating an example of a synthetic video.

### Description of Embodiments

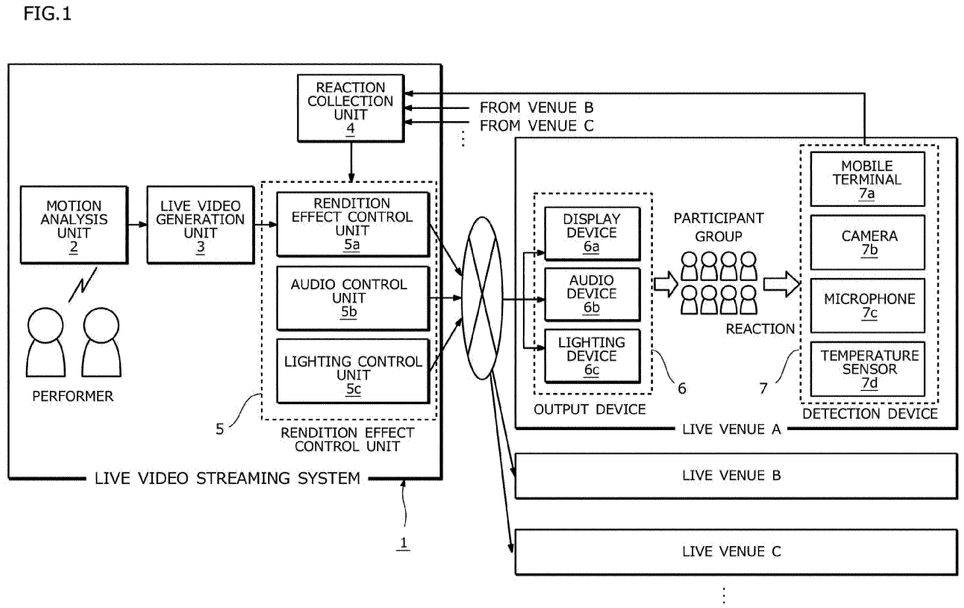

Fig. 1 is a block diagram of a virtual live system according to the present embodiment. This virtual live system mainly includes a live streaming system 1 connected to a plurality of live venues A to C different in location via a network, and simultaneously streams a live video obtained by converting songs and dances of a virtual character (including a group of characters) into a video to the live venues A to C. Thus, a simultaneous live performance by the virtual character is held in many venues. Note that, in the present specification, the term "live venue" widely covers places where a simultaneous live streaming takes place such as moving image streaming, a virtual reality (VR) streaming, augmented reality (AR) streaming, including not only a real venue, but also an online venue (the number of participants does not matter).

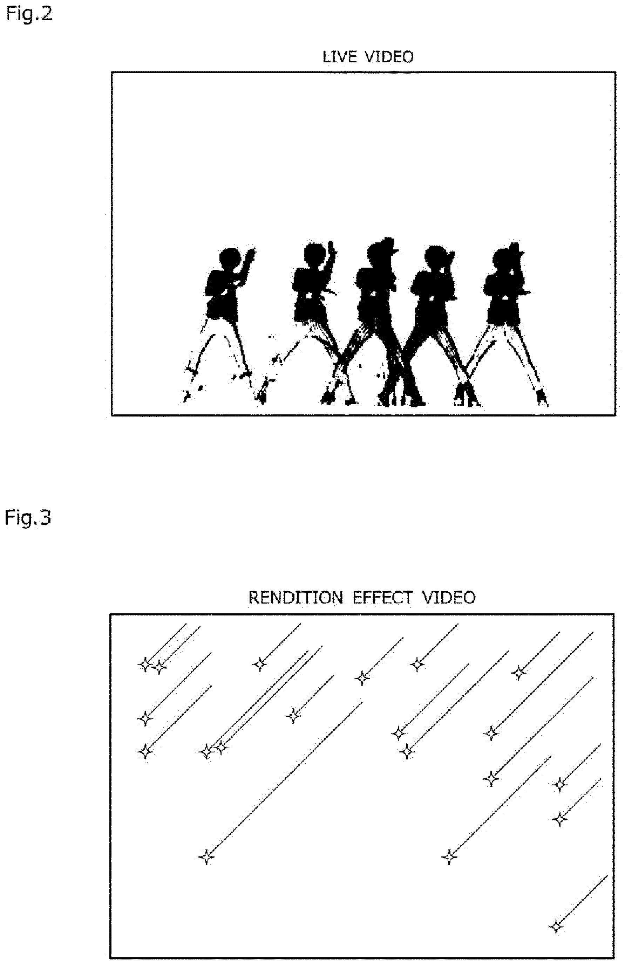

The live streaming system 1 includes a motion analysis unit 2, a live video generation unit 3, a rendition effect control unit 4, and a reaction collection unit 5. The motion analysis unit 2 analyzes and digitizes the movement of a performer on the basis of the outputs of a large number of motion sensors attached to the performer (actor) who performs the movement of the character. The live video generation unit 3 generates an animated live video related to a virtual character as illustrated, for example, in Fig. 2 by converting the digitized movement of the performer into the movement of the virtual character. This live video is simultaneously streamed to the live venues A to C via a network such as the Internet.

Each of the live venues A to C includes an output device 6 and a detection device 7. The output device 6 includes a display apparatus 6a such as a projector that projects a video on a screen, an audio device 6b mainly including a speaker, and a lighting device 5c that emits light, a laser beam, or the like. The display apparatus 5a is controlled by a video control unit 5a, the audio device 6b is controlled by an audio control unit 5b, and the lighting device 6c is individually controlled for each live venue by a lighting control unit 5c.

The detection device 7 directly or indirectly detects the reaction of the participant viewing the live video at a specific live venue. In the present embodiment, as the detection device 7, a mobile terminal 7a possessed by the participant, a camera 7b that looks down on all the participants in the live venue, a microphone 7c that collects the voices of all the participants in the live venue, and a temperature sensor 7d that detects the temperature in the live venue are assumed, and at least one of these is used.

In a case where the mobile terminal 7a such as a smartphone held by the participant is used as the detection device 7, the reaction of the participant can be detected and estimated on the basis of the number of predetermined user operations (for example, the number of taps) on the mobile terminal 7a. In a virtual live, in a case where there is a request from a character, the participant taps on an app of the mobile terminal 7a at high speed in order to support a favorite character (the magnitude of the number of taps indicates the degree of support). Therefore, as the total number of taps by the participants is larger, it can be considered that the live venue is more excited, that is, the reaction of the participant is higher.

In a case where the camera 7b installed in the live venue is used as the detection device 7, the reaction of the participant can be detected and estimated on the basis of the movement in the image captured by the camera 7b. In general, as the live venue gets excited, the movement of people and the movement of bright spots derived from penlights tend to be large. Therefore, the images captured by the camera 7b are monitored in time series, and as the movement (for example, optical flow) in the image increases, it can be considered that the live venue is more excited, that is, the reaction of the participant is higher.

In a case where the microphone 7c installed in the live venue is used as the detection device 7, the reaction of the participant can be detected and estimated on the basis of the magnitude of the sound acquired by the microphone 7c. In a virtual live, when there is a request from a character, the participant cheers with a loud voice. Therefore, as the volume of the cheer by the participant is larger, it can be considered that the live venue is more excited, that is, the reaction of the participant is higher.

In a case where the temperature sensor 7d installed in the live venue is used as the detection device 7, the reaction of the participant can be detected and estimated on the basis of a temperature change detected by the temperature sensor 7d. As the live venue gets excited, the live venue is filled with excitement, and the room temperature rises. Therefore, the rise in the room temperature is monitored by the temperature sensor 7d, and as the degree of the temperature rise increases, it can be considered that the live venue is more excited, that is, the reaction of the participant is higher.

The live streaming system 1 controls the detection effect for each live venue according to the reactions of the participants for each live venue detected by the detection device 7 on the live venues A to C side. Specifically, the reaction collection unit 4 collects the reactions of the participants viewing the live video at the live venues A to C from the detection devices 7 in the live venues A to C in real time for each live venue. The rendition effect control unit 5 determines a rendition effect to be rendered at the live venues A to C for each live venue on the basis of the reactions of the participants at each live venue collected by the reaction collection unit 4. As the rendition effect control unit 5, the video control unit 5a, the audio control unit 5b, and the lighting control unit 5c are provided.

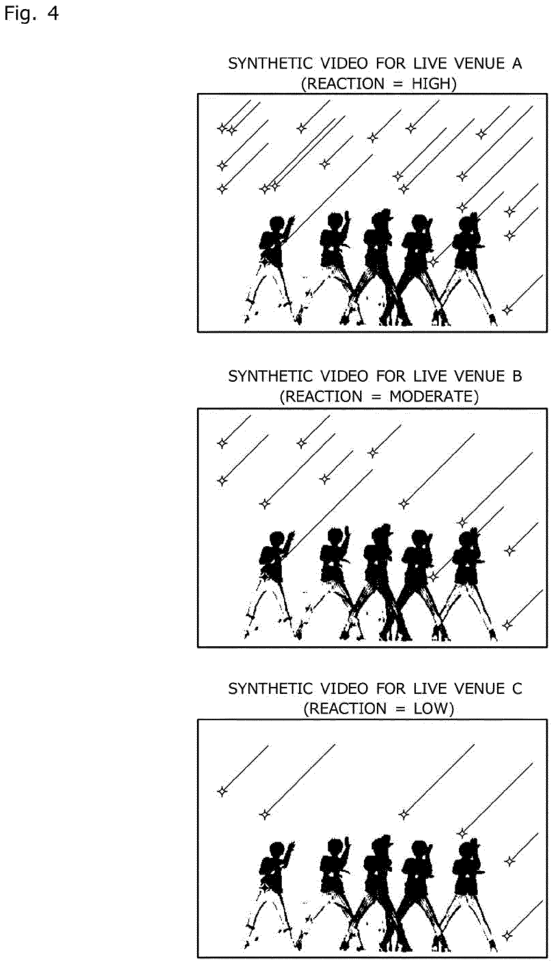

The video control unit 5a generates a rendition effect video for each live venue as a rendition effect and streams live videos individually synthesized with the video effect video to the live venues A to C. Fig. 3 illustrates shooting stars added as a background layer of the live video as an example of the rendition effect video. The number of shooting stars per unit time is determined for each live venue according to the reactions of the participants in each of the live venues A to C and increases as the reactions of the participants are higher. Fig. 4 is a diagram illustrating an example of a synthetic video obtained by synthesizing a rendition effect video of shooting stars with a live video. In the live venue A where the reactions of the participants are high, the number of the shooting stars in the synthetic image is large, and thus rendition suitable for the very excited participants is performed. In the live venue B where the reactions of the participants are moderate, the number of shooting stars in the synthetic image is normal, and thus corresponding rendition is performed without giving discomfort to the normally excited participants. In the live venue C where the reactions of the participants are low, the number of shooting stars in the synthetic image is small, and thus corresponding rendition is performed without giving discomfort to the participants who are less excited.

Note that the rendition effect video to be synthesized with the live video is not limited to shooting stars, but various known videos can be arbitrarily used. For example, in a case where a burning flame is used as the rendition effect video, the magnitude and momentum of the flame may be variably controlled according to the reactions of the participants. Furthermore, the rendition effect video may not be of the same type, but different types of rendition effect videos may be added according to the reactions of the participants. Moreover, as the rendition effect by the video control unit 5a, not only the rendition effect video as the background is added, but also the character itself in the live video may be changed, for example, the amount of sweat of the character may be changed.

The audio control unit 5b determines a rendition effect audio for each live venue as the rendition effect and individually instructs the audio device 6b on the live venue side to execute it. For example, as the reactions of the participants become higher, the volume is increased or the number of sound sources is increased.

The lighting control unit 4c determines rendition effect lighting for each live venue as the rendition effect and individually instructs the lighting device 6c on the live venue side. For example, as the reactions of the participants become higher, the number of pieces of light emission is increased, the flash interval is shortened, or the number of laser beams is increased.

As described above, according to the present embodiment, the rendition effect to be rendered at the live venue is individually determined for each live venue according to the reactions of the participants at each live venue, in other words, the degree of excitement at the live venue. Thus, the rendition effect suitable for each live venue is executed. As a result, the sense of immersion of all the participants can be effectively enhanced in all the live venues where the rye streaming is performed simultaneously without giving discomfort to the participants in a specific live venue.

### Reference Signs List

- 1: live streaming system
- 2: motion analysis unit
- 3: live video generation unit
- 4: reaction collection unit
- 5: rendition effect control unit
- 5a: video control unit
- 5b: audio control unit
- 5c: lighting control unit
- 6: output device
- 6a: display device
- 6b: audio device
- 6c: lighting device
- 7: detection device
- 7a: mobile terminal
- 7b: camera
- 7c: microphone
- 7d: temperature sensor

## Claims

1. A live streaming system that simultaneously performs live streaming to a plurality of live venues different in location, the system comprising:
a reaction collection unit configured to collect a reaction of a participant at a live venue in real time for each live venue from a detection device in the live venue; and
a rendition effect control unit configured to individually determine a rendition effect to be rendered at the live venue for each live venue on a basis of the reaction of the participant at each live venue collected by the reaction collection unit.

2. The live streaming system according to claim 1, wherein the rendition effect control unit generates a rendition effect video for each live venue as the rendition effect and streams a live video synthesized with the video effect video to the live venue.

3. The live streaming system according to claim 1, wherein the rendition effect control unit determines a rendition effect audio for each live venue as the rendition effect and instructs an audio device on a live venue side.

4. The live streaming system according to claim 1, wherein the rendition effect control unit determines rendition effect lighting for each live venue as the rendition effect and instructs a lighting device on a live venue side.

5. The live streaming system according to any of claims 1 to 4, wherein
the detection device is a plurality of mobile terminals owned by a participant in a live venue, and
the reaction of the participant is a number of user operations of the participant with respect to the plurality of mobile terminals.

6. The live streaming system according to any of claims 1 to 4, wherein
the detection device is a camera installed in each live venue, and
the reaction of the participant is movement in an image acquired by the camera.

7. The live streaming system according to any of claims 1 to 4, wherein
the detection device is a microphone installed in each live venue, and
the reaction of the participant is a sound acquired by the microphone.

8. The live streaming system according to any of claims 1 to 4, wherein
the detection device is a temperature sensor installed in each live venue, and
the reaction of the participant is a temperature change acquired by the temperature sensor.

9. A live streaming method that simultaneously performs live streaming to a plurality of live venues different in location, the method comprising:
a first step of generating a live video of a virtual character by converting a movement of a performer into a movement of the virtual character;
a second step of collecting a reaction of a participant viewing the live video at a live venue in real time for each live venue from a detection device on a live venue side;
a third step of determining for each live venue a rendition effect to be rendered at the live venue on a basis of the collected reaction of the participant at each live venue;
a fourth step of generating a rendition effect video for each live venue on a basis of the determined rendition effect for each live venue;
a fifth step of synthesizing the generated live video with the generated rendition effect video for each live venue; and
a sixth step of streaming the live video for each live venue synthesized with the rendition effect video to the live venue.
